# EUROPÄISCHE PATENTSCHRIFT

(11) **EP 0 345 681 B1**
(45) Veröffentlichungstag und Bekanntmachung des Hinweises auf die Patenterteilung: **26.05.1993**
(21) Anmeldenummer: 89110098.4
(22) Anmeldetag: 03.06.1989
(51) Int. Cl.: E05C 3/16

(54) **Verschlusseinrichtung für eine Heissgerätetür**
Locking device for the door of a heating device
Dispositif de fermeture d'une porte d'appareil chauffant

(30) Priorität: 07.06.1988 DE 3819383
(43) Veröffentlichungstag der Anmeldung: 13.12.1989
(73) Patentinhaber: TRUMPF SCHLOSS- UND BESCHLAGFABRIK G.M.B.H, D-42579 Heiligenhaus (DE)
(72) Erfinder: Hopp, Werner, D-5620 Velbert 1 (DE)
(74) Vertreter: Götz, Friedrich, Dipl.-Phys.

(56) Entgegenhaltungen:
- GB-A- 2 083 160

## Beschreibung

### Technisches Gebiet

Die Erfindung betrifft eine Verschlußeinrichtung für die Tür eines mit höherer Temperatur und/oder Überdruck arbeitenden Gerätes mit einem eine Falle betätigenden Türgriff und Mitteln zur Erzielung einer Zwischenrast.

### Stand der Technik

Aus der DE-PS 32 25 439 ist eine Verschlußeinrichtung für die Tür eines Heißluftgerätes bekannt geworden. Bei dieser Einrichtung hebt der Türgriff eine Verschlußlagerrolle über einen am Gehäuse angebrachten Haken hinweg. Die Tür wird aber noch nicht freigegeben, weil ein zusätzlicher Verriegelungsgriff mit seiner Verriegelungslagerrolle gegen den Haken läuft. Dieser winkelförmige Griff stößt mit seiner Handhabe bei geschlossener Tür gegen den Türpfosten, so daß er nur nach der Vorentriegelung in Öffnungsrichtung bewegt werden kann. Nach der Betätigung des Türgriffes ist die Tür so weit abgeschwenkt, daß ein Überdruck oder Heißdampf entweichen kann.

Um den Verriegelungsgriff zu lösen, muß man zwischen Tür und Rahmen fassen und den Griff nach hinten drücken. Dies ist nicht ungefährlich, weil der Griff und die benachbarten Gehäuseteile recht heiß werden können. Da Heißgeräte mit Dampf oder Heißluft von max. 300° C arbeiten, können sich verdeckt liegende Rahmen-und Beschlagteile so weit aufheizen, daß es auch ohne Dampfeinwirkung zu Verbrennungen der Finger kommen kann.

### Darstellung der Erfindung

Der Erfindung liegt die Aufgabe zugrunde, einen absolut ungefährlichen und bequem zu bedienenden Heißgeräteverschluß zu schaffen.

Diese Aufgabe wird dadurch gelöst, daß am Türpfosten ein Kloben befestigt ist, daß im Schloßgehäuse eine um den Kloben herumgreifende Drehfalle gelagert ist, daß der als zweiarmiger Hebel ausgebildete Türgriff auf der Drehfalle aufliegt, daß der Drehfalle eine Sperrklinke gegenübersteht, die bei der ersten Türgriffbetätigung die Drehfalle in einer Halb-Offen-Position festhält und daß an der Sperrklinke ein Auslösehebel gelagert ist, der bei der zweiten Türgriffbetätigung vom Griffende hochgedrückt wird und dabei die Sperrklinke mitnimmt.

Alternativ wird anstelle des Auslösehebels ein Steuerhebel benutzt, dessen Stirnfläche der mit zwei Rastnasen versehenen Sperrklinke gegenübersteht. Beim ersten Öffnungsschritt hebt der Türgriff über den Steuerhebel die Sperrklinke an, bis die Drehfalle nach Überwindung der ersten Rastnase in Bewegung kommt und an der zweiten Rastnase stoppt. Dabei nimmt die Klobenrolle die erste Verriegelungsposition ein. Beim zweiten Öffnungsschritt hebt der Steuerhebel die zweite Rastnase der Sperrklinke an, wodurch die Drehfalle in die Offen-Position kippen kann.

Vorteilhafte Weiterbildungen der Erfindung sind in den Unteransprüchen genannt.

### Beschreibung der Zeichnungen

Ausführungsbeispiel der Erfindung werden anhand von Fig. 1 - 7 der Zeichnung erläutert.
- Fig. 1: zeigt eine Ausführungsform der Erfindung bei verschlossener Tür,
- Fig. 2: die Stellung der Teile nach Vorentriegelung,
- Fig. 3: die Freigabestellung.
- Fig. 4 - 6: zeigt eine alternative Bauform in den entsprechenden Schloßstellungen,
- Fig. 7: stellt den Steuerhebel dar.

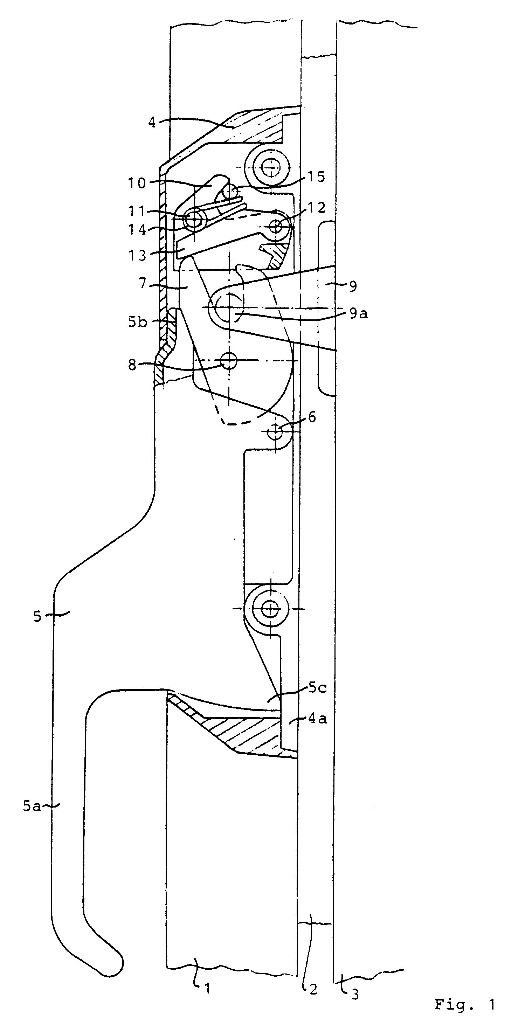

In den Figuren 1 - 3 ist mit 1 die Tür bezeichnet, mit 2 die Türdichtung und mit 3 der Türpfosten.

In die Tür 1 ist ein im Schnitt dargestelltes Verschlußgehäuse 4 eingesetzt, in welchem der Türgriff 5 um die Achse 6 schwenkbar gelagert ist. Der Griff ist als zweiarmiger Hebel ausgebildet und besteht aus der Handhabe 5a als Kraftarm und dem oberen Hebelarm 5b als Lastarm. Ein Nocken 5c ruht auf dem Gehäuseteil 4a, wirkt also als Anschlag. Der U-förmige Hebelarm 5b, der teilweise im Schnitt dargestellt ist, ruht auf einer Drehfalle 7, die um die Achse 8 schwenkbar gelagert ist. Das Maul der Drehfalle 7 umfaßt den Sperrstift 9a eines Klobens 9, der mit dem Türpfosten 3 verbunden ist.

Über der Drehfalle 7 ist eine Sperrklinke 10 gelagert, die begrenzt um die Achse 11 geschwenkt werden kann. Auf der Sperrklinke 10 ist über einen Bolzen 12 ein Auslösehebel 13 gelagert, der durch eine Schenkelfeder 14 gegen die Drehfalle 7 gedrückt wird. Die Schenkelfeder 14 ist um die Achse 11 geschlungen. Der obere Federschenkel stützt sich an einem gehäusefesten Stift 15 ab, der zugleich als Anschlag für die Sperrklinke 10 dient. Die Schenkelfeder 14 bewirkt über den Auslösehebel 13 zugleich, daß auch die Sperrklinke 10 auf ihrem Anschlag, dem Stift 15, ruht.

Im Schließzustand nach Fig. 1 ist die Dichtung 2 so weit zusammengepreßt, daß sich im Behälter ein gewisser Überdruck aufbauen kann.

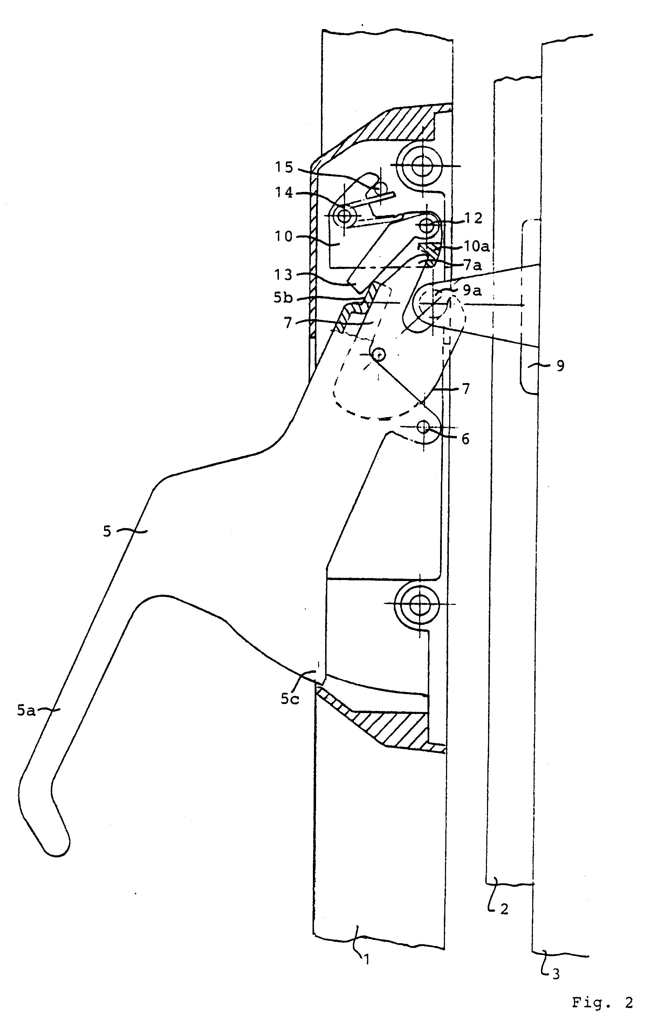

Wenn man nach Fig. 2 den Türgriff 5 nach links zieht, drückt sein Hebelarm 5b die Drehfalle 7 in die gezeichnete Mittelposition, bis die Nase 7a gegen den Rastvorsprung 10a der Sperrklinke 10 stößt. Der Auslösehebel 13 wird dabei nach unten gedrückt, bis er auf dem Hebelarm 5b aufliegt. Dabei öffnet sich die Tür zwangsläufig um etwa 15 mm, wodurch ein etwaiger Überdruck abgebaut wird und Dampfschwaden entweichen können. Wenn jetzt die Handhabe 5a nach rechts bewegt wird, bleibt die Drehfalle 7 in der Mittelposition stehen, während der Auslösehebel 13 mit seiner Stirnfläche vor die Kante des Hebelarmes 5b gelangt.

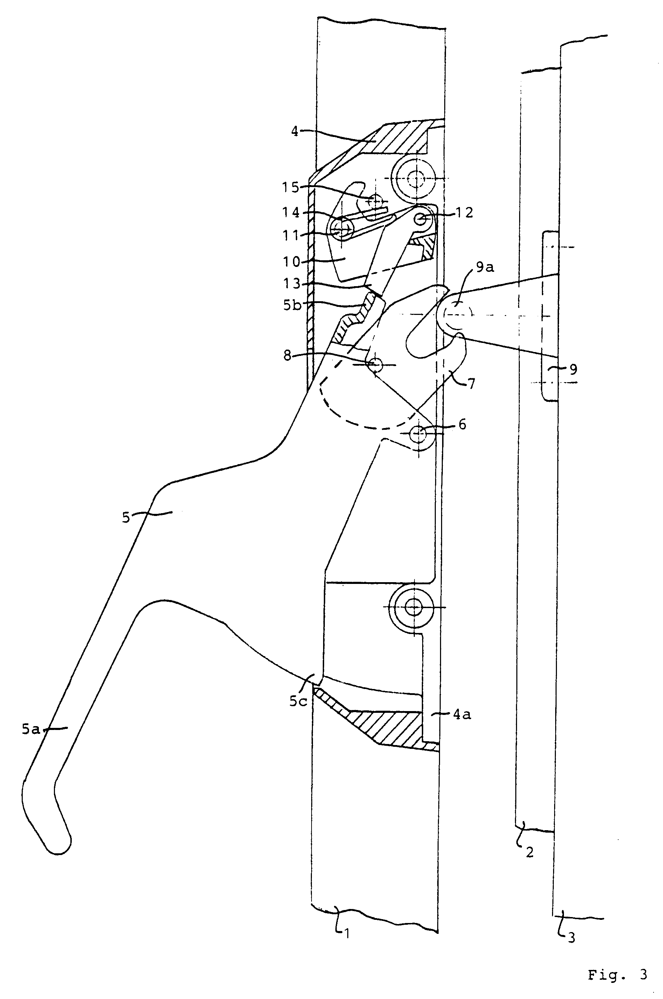

Beim Einleiten der zweiten Entriegelungsstufe drückt der Türgriff 5 den Auslösehebel 13 hoch, wobei dieser entgegen der Kraft der Feder 14 die Sperrklinke 10 nach oben schwenkt. Im Verlauf dieser Bewegung wird die Drehfalle 7 freigegeben und der Sperrstift 9a verläßt das Maul der im Uhrzeigersinn bewegten Drehfalle 7. Die Tür kann also voll geöffnet werden, wie die Stellung der Teile in Fig. 3 zeigt.

Wenn die Tür geschlossen wird, nehmen alle Teile erneut die in Fig. 1 gezeigte Position ein.

Durch die geschickte Anwendung einer Sperrklinke und eines darauf gelagerten Auslösehebels gelingt es in überraschender Weise, einen in zwei Stufen zu betätigenden Verschluß zu schaffen, der narrensicher Unfälle verhütet. Die Vorrichtung ist besonders bedienungsfreundlich, weil alle Betätigungsbewegungen über die bequeme Handhabe vorgenommen werden, ohne daß man den Griff dabei loslassen müßte.

Der Türgriff 5 stellt in seinem Gesamtaufbau einen nach außen geschlossenen, teilweise hohlen Körper dar, der so in das Verschlußgehäuse 4 eingesetzt ist, daß die Funktionsteile nicht sichtbar sind. Dieser Aufbau hat den Vorteil, daß kein Schmutz eindringen kann.

Es ist ohne weiteres möglich, im mittleren Teil des Griffes einen Schließzylinder unterzubringen, so daß der beschriebene Heißgeräteverschluß ohne Veränderung der sonstigen Funktionen auch mit Sicherheitsschloß gefertigt werden kann.

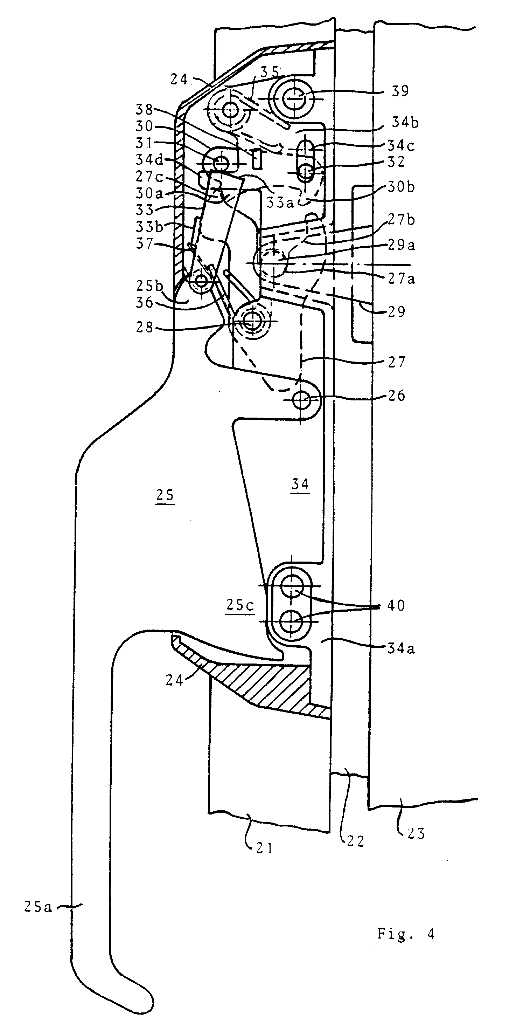

In Fig. 4 - 6 ist mit 21 die Tür bezeichnet, mit 22 die Dichtung, mit 23 der Türpfosten, mit 24 der aufgeschnittene Verschlußgehäusedeckel, mit 25 der Türgriff, mit 26 die Achse des Türgriffes, mit 27 die teilweise verdeckte Drehfalle, mit 28 die Achse der Drehfalle, mit 29 der Schließkloben, mit 29a die Schließklobenrolle, mit 30 die Sperrklinke und mit 34 das gegossene Verschlußgehäuse.

Der Türgriff 25 besteht aus der Handhabe 25a, dem oberen Hebelarm 25b und einem Nocken 25c, der auf dem Gehäuseteil 34a aufliegt. Die Sperrklinke 30 weist links einen Anschlagstift 31 und rechts einen Lagerstift 32 auf. Der Anschlagstift 31 ruht auf der Stirnfläche 33a eines Steuerhebels 33, der an dem Hebelarm 25b schwenkbar gelagert ist. Die Sperrklinke 30 ist zwischen Stegen 34b geführt, deren Langlöcher 34c den Lagerstift 32 aufnehmen.
Die Stege weisen weiterhin Vorsprünge 34d auf, auf denen der Lagerstift 31 der Sperrklinke 30 ruht. Eine Schenkelfeder 35 drückt die Sperrklinke 30 nach unten. Diese Klinke weist unten links und rechts Rastnasen 30a und 30b auf.

Die Drehfalle 27 hat zwei Verriegelungspositionen 27a und 27b, in denen die Klobenrolle 29a in der Schließ- oder Vorrastposition festgehalten wird. Ferner trägt die Falle eine Steuerschneide 27c, die von der Rastnase 30a festgehalten wird. Als kraftübertragendes Element ist um die Achse 28 der Drehfalle 27 eine Schenkelfeder 36 geschlungen, deren Schenkel auf dem Hebelarm 25b und der Drehfalle selbst aufliegen. Eine weitere Schenkelfeder 37 drückt den Steuerhebel 33 gegen die Drehfalle 27.

Die beschriebene Position der Teile zeigt die zweite Verriegelungsstufe, in der die Türdichtung 22 mehr oder weniger zusammengepreßt, der Behälter also dicht verschlossen ist.

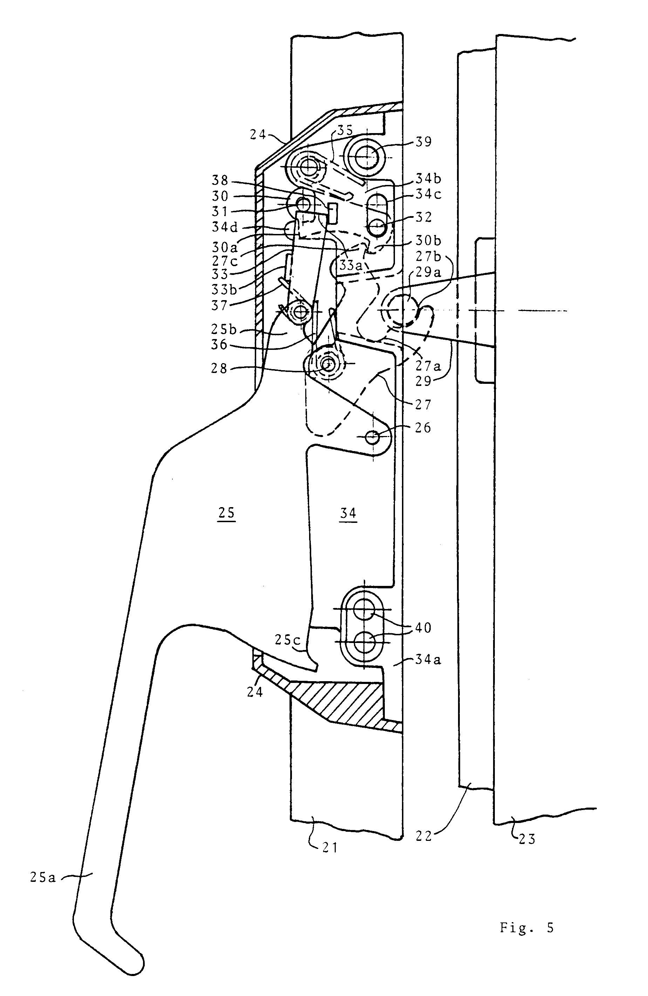

Wenn man die Handhabe 25a nach links zieht, bewegt sich der Hebel 25b auf einer Kreisbahn um die Achse 26. Dabei drückt der Steuerhebel 33 das linke Ende der Sperrklinke 30 nach oben, bis die Rastnase 30a die Steuerschneide 27c freigibt und die Drehfalle 27 in Uhrzeigerrichtung umschwenkt. Die Bewegung endet, wenn die Steuerschneide 27c von der rechten Rastnase 30b blockiert wird. Zugleich rollt die Klobenrolle 29a in die in Fig. 5 gezeigte Stellung. In dieser stabilen Zwischenraststellung ist die Tür so weit geöffnet, daß sich ein Überdruck abbauen kann oder Heißdampfschwaden gefahrlos abziehen.

Man erkennt, daß der hochgeschobene Steuerhebel 33 an einem Anschlag 38 ruht. Wenn jetzt die Handhabe 25a losgelassen wird, drückt die Schenkelfeder 36 den Griff 25 in die senkrechte Ausgangsstellung zurück. Hierdurch taucht der Steuerhebel 33 unter dem Anschlag 38 weg, so daß er mit Hilfe der Feder 37 nach rechts schwenken kann, bis seine Stirnfläche 33a unter dem Lagerstift 32 liegt.

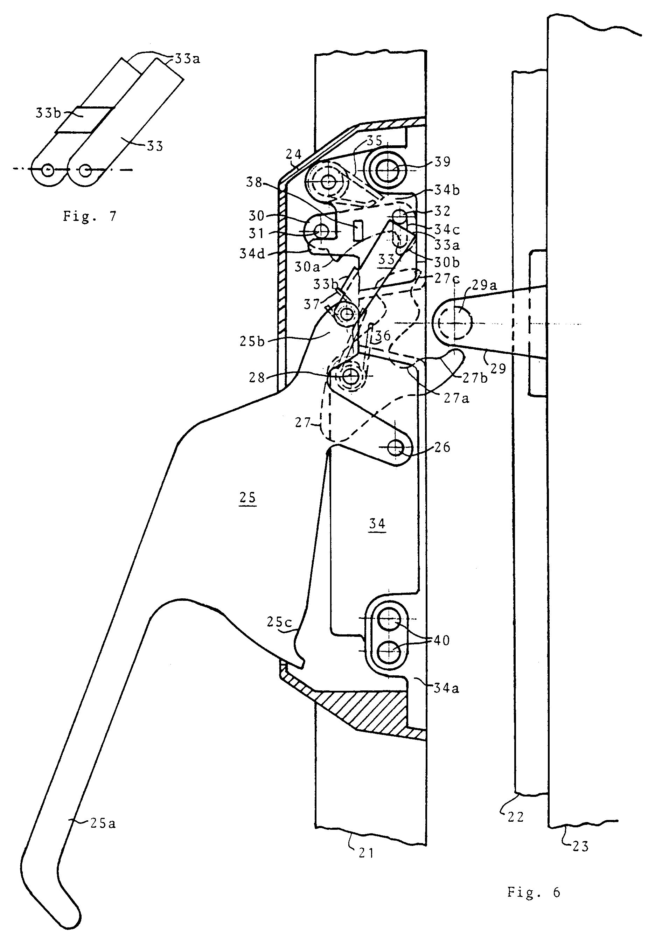

Wenn jetzt entsprechend Fig. 6 die Handhabe 25a erneut nach links gezogen wird, drückt der Steuerhebel 33 über den Lagerstift 32 das rechte Ende der Sperrklinke 30 nach oben, wodurch die Sperrnase 30b überwunden und die Drehfalle 27 ganz freigegeben wird. Die Klobenrolle 29a kann sich frei aus dem Maul der Drehfalle 27 herausbewegen und die Tür 1 kann voll geöffnet werden. Läßt man die Handhabe 25a los, stellt sich der Griff 25 erneut zurück. Dabei wandert die Stirnfläche 33a des Steuerhebels 33 nach unten und die Sperrklinke 30 kann erneut in die Ruhestellung gehen.

Wichtig ist, daß die Drehfalle 27 die in Fig. 6 eingezeichnete Stellung beibehält, damit sie beim Zudrücken der Tür 1 die Klobenrolle 29a aufnehmen kann. Diese läuft dann gegen einen Vorsprung 27d der Drehfalle und drückt sie in die Schließlage entsprechend Fig. 4. Bei diesem Vorgang drückt die Drehfalle 27 den Steuerhebel 33 über die abgewinkelte Anschlagfläche 33b zurück in die Ausgangslage entsprechend Fig. 4.

Fig. 7 zeigt als Einzelheit die bevorzugte Form des Steuerhebels 33. Er besteht aus zwei planparallelen, identischen Teilen mit der Anschlagfläche 33b als Verbindungslasche. Der Hebel wird durch Stanzen und Abkanten aus einem Blechstück hergestellt. Er bewirkt eine gleichmäßige Kraftübertragung auf die Sperrklinke 30 und verhindert das Verkanten.

### Bester Weg zur Ausführung der Erfindung

Die alternative Ausführungsform nach Fig. 4 - 6 hat den besonderen Vorteil, daß Drehfalle, Sperrklinke und Steuerhebel als preisgünstige Stanzteile hergestellt werden können. Zur Kostenreduzierung trägt auch bei, daß die Teile nur zusammengesteckt werden und nicht vernietet werden müssen. Die Steckachsen und Stifte werden durch den Verschlußgehäusedeckel 24 in ihrer Lage gehalten.
Die Verschlußeinrichtung erlaubt bei geringstem Bedienungsaufwand und ohne jede Gefahr für das Personal, drei stabile Betriebszustände zu verwirklichen, wobei sowohl in der Zwischenraststufe als auch in der Schließphase die Drehfalle durch Verriegelung gesichert ist. Zusätzlich ist es aber auch möglich, die Tür aus der Zwischenraststufe heraus direkt zuzudrücken.

### Gewerbliche Verwertbarkeit

Die neuartige Verschlußeinrichtung kann ohne weiteres an jede Art von Geräten oder Maschinen angebaut werden, in denen gefährliche Temperaturen, leicht erhöhte Drücke oder Dampfatmosphären auftreten, die bei plötzlichem Entweichen die Bedienungsperson schädigen könnten. Da der gesamte Aufbau einschließlich der Befestigungslöcher symmetrisch ist, genügt eine Bauform für rechts und links angeschlagene Türen.

## Patentansprüche

1. Verschlußeinrichtung für die Tür eines mit höherer Temperatur und/oder Überdruck arbeitenden Gerätes mit einem eine Falle (7) betätigenden Türgriff (5) und Mitteln zur Erzielung einer Zwischenrast,
dadurch gekennzeichnet,
daß am Türpfosten (3) ein Kloben (9) befestigt ist,
daß im Verschlußgehäuse (4) eine um den Kloben (9) herumgreifende Drehfalle (7) gelagert ist,
daß der als zweiarmiger Hebel ausgebildete Türgriff (5) auf der Drehfalle (7) aufliegt,
daß der Drehfalle (7) eine Sperrklinke (10) gegenübersteht, die bei der ersten Türgriffbetätigung die Drehfalle (7) in einer Halb-Offen-Position festhält und daß an der Sperrklinke (10) ein Auslösehebel (13) gelagert ist, der bei der zweiten Türgriffbetätigung vom Ende des Hebelarmes (5b) hochgedrückt wird und dabei die Sperrklinke (10) mitnimmt.

2. Verschlußeinrichtung nach Anspruch 1, dadurch gekennzeichnet, daß der Ausschlag der Sperrklinke (10) durch einen Stift (15) begrenzt ist und daß der Aulösehebel (13) durch eine Schenkelfeder (14) gegen die Drehfalle (7) bzw. das Hebelarmende (5b) gedrückt wird.

3. Verschlußeinrichtung für die Tür eines mit höherer Temperatur und/oder Überdruck arbeitenden Gerätes mit einem eine Falle (27) betätigenden Türgriff (25) und Mitteln zur Erzielung einer Zwischenrast,
dadurch gekennzeichnet,
daß am Türpfosten (23) ein Kloben (29) befestigt ist,
daß im Verschlußgehäuse (34) eine um die Klobenrolle (29a) herumgreifende Drehfalle (27) gelagert ist, die zwei Verriegelungspositionen (27a, 27b) aufweist,
daß der als zweiarmiger Hebel ausgebildete Türgriff (25) auf die Drehfalle (27) einwirkt,
daß der Drehfalle (27) eine mit zwei Rastnasen (30a, 30b) versehene Sperrklinke (30) gegenübersteht,
daß am Türgriff (25) ein auf der Drehfalle (27) aufliegender Steuerhebel (33) gelagert ist, dessen Stirnfläche (33a) der Anhebung der Sperrklinke (30) dient,
daß der Türgriff (25) beim ersten Öffnungsschritt über den Steuerhebel (33) die Sperrklinke (30) anhebt, wodurch die Drehfalle (27) nach Überwindung der ersten Rastnase (30a) an der zweiten Rastnase (30b) stoppt und die Klobenrolle (29a) in der Drehfalle (27) von der ersten Verriegelungsposition (27a) in die zweite Verriegelungsposition (27b) gelangt und
daß der Türgriff (25) beim zweiten Öffnungsschritt über den Steuerhebel (33) die zweite Rastnase (30b) der Sperrklinke (30) anhebt, wodurch die Drehfalle (27) in die Offen-Position kippt.

4. Verschlußeinrichtung nach Anspruch 3, dadurch gekennzeichnet, daß die Sperrklinke (30) über der ersten Rastnase (30a) einen Anschlagstift (31) und über der zweiten Rastnase (30b) einen Lagerstift (32) aufweist, der in den Langlöchern (34c) von zwei parallelen Stegen (34b) gleitet.

5. Verschlußeinrichtung nach Anspruch 4, dadurch gekennzeichnet, daß der Steuerhebel (33) am oberen Hebelarm (25b) des Türgriffes (25) drehbar gelagert ist und mit seiner Stirnfläche (33a) in der Schließposition gegen den Anschlagstift (31) der Sperrklinke (30) stößt.

6. Verschlußeinrichtung nach Anspruch 4, dadurch gekennzeichnet, daß eine Schenkelfeder (35) die Sperrklinke (30) in die untere Endlage drückt.

7. Verschlußeinrichtung nach Anspruch 4, dadurch gekennzeichnet, daß der obere Hebelarm (25b) des Türgriffes (25) auf eine Schenkelfeder (36) einwirkt, deren zweiter Schenkel auf der Drehfalle (27) aufliegt.

8. Verschlußeinrichtung nach Anspruch 3, dadurch gekennzeichnet, daß eine Schenkelfeder (37) den Steuerhebel (33) gegen die Drehfalle (27) drückt.

9. Verschlußeinrichtung nach Anspruch 5, dadurch gekennzeichnet, daß der Steuerhebel (33) eine abgewinkelte Anschlagfläche (33b) aufweist, die der Rückstellung des Steuerhebels durch die Drehfalle (27) dient.

10. Verschlußeinrichtung nach Anspruch 5, dadurch gekennzeichnet, daß der Steuerhebel (33) aus zwei planparallelen, identischen Teilen besteht, die durch die Anschlagfläche (33b) miteinander verbunden sind.

## Claims

1. Closure device for the door of an appliance operating at increased temperatures and/or pressures, having a door handle (5), which operates a latch (7), and means of achieving an intermediate latch, characterized in that
a hook (9) is fastened to the door post (3),
that a rotary latch (7) which engages around the hook (9) is supported in the closure housing (4),
that the door handle (5) in the form of a two-armed lever rests on the rotary latch (7),
that lying opposite the rotary latch (7) is a retaining pawl (10) which, on first operation of the door handle, holds the rotary latch (7) in a semi-open position
and that supported on the retaining pawl (10) is a release lever (13) which, on second operation of the door handle, is pressed upwards by the end of the lever arm (5b) and in the process effects a coupled motion of the retaining pawl (10).

2. Closure device according to claim 1, characterized in that the deflection of the retaining pawl (10) is limited by a pin (15) and that the release lever (13) is pressed by a leg spring (14) towards the rotary latch (7) or the lever arm end (5b).

3. Closure device for the door of an appliance operating at increased temperatures and/or pressures, having a door handle (25), which operates a latch (27), and means of achieving an intermediate latch, characterized in that
a hook (29) is fastened to the door post (23),
that a rotary latch (27) having two locking positions (27a, 27b) is supported in the closure housing (34) and engages around the hook cylinder (29a),
that the door handle (25) in the form of a two-armed lever acts upon the rotary latch (27),
that a retaining pawl (30) provided with two detent lugs (30a, 30b) lies opposite the rotary latch (27),
that supported on the door handle (25) is a control lever (33), which rests on the rotary latch (27) and whose face (33a) serves to lift the retaining pawl (30),
that the door handle (25), in the first opening stage, via the control lever (33) lifts the retaining pawl (30), as a result of which the rotary latch (27) on overcoming the first detent lug (30a) stops at the second detent lug (30b) and the hook cylinder (29a) in the rotary latch (27) moves from the first locking position (27a) into the second locking position (27b) and
that the door handle (25), in the second opening stage, via the control lever (33) lifts the second detent lug (30b) of the retaining pawl (30), as a result of which the rotary latch (27) tilts into the open position.

4. Closure device according to claim 3, characterized in that the retaining pawl (30) has, above the first detent lug (30a), a stop pin (31) and, above the second detent lug (30b), a bearing pin (32) which slides in the oblong holes (34c) of two parallel webs (34b).

5. Closure device according to claim 4, characterized in that the control lever (33) is rotatably mounted on the top lever arm (25b) of the door handle (25) and, in the closed position, pushes with its face (33a) against the stop pin (31) of the retaining pawl (30).

6. Closure device according to claim 4, characterized in that a leg spring (35) presses the retaining pawl (30) into the bottom end position.

7. Closure device according to claim 4, characterized in that the top lever arm (25b) of the door handle (25) acts upon a leg spring (36), whose second leg rests upon the rotary latch (27).

8. Closure device according to claim 3, characterized in that a leg spring (37) presses the control lever (33) against the rotary latch (27).

9. Closure device according to claim 5, characterized in that the control lever (33) has an angular stop face (33b), which is used for resetting of the control lever by the rotary latch (27).

10. Closure device according to claim 5, characterized in that the control lever (33) comprises two plane-parallel identical parts, which are connected to one another by the stop face (33b).

## Revendications

1. Dispositif de fermeture pour une porte d'un appareil fonctionnant en surpression et/ou à des températures élevées comportant une poignée de porte (5) qui actionne un pêne (7) et des moyens pour l'obtention d'un cran intermédiaire,
caractérisé en ce que
sur le montant de porte (3) est fixé un gond (9), que dans le boîtier de serrure (4) est logé un pêne rotatif (7) entourant le gond (9), que la poignée de porte (5) conçue comme un levier à deux bras repose sur le pêne rotatif (7), qu'en face du pêne rotatif (7) se trouve un cliquet d'arrêt (10) qui, au premier actionnement de la poignée de porte, maintient le pêne rotatif (7) en position semi-ouverte et que sur le cliquet d'arrêt (10) est logé un levier de déclenchement (13) qui, au deuxième actionnement de la poignée de porte, est poussé vers le haut par l'extrémité du bras de levier (5b), entraînant alors le cliquet d'arrêt (10).

2. Dispositif de fermeture selon la revendication 1, caractérisé en ce que l'amplitude du cliquet d'arrêt (10) est limitée par une cheville (15) et que le levier de déclenchement (13) est poussé, par un ressort en épingle à cheveux (14) contre le pêne rotatif (7) et contre l'extrémité de bras de levier (5b).

3. Dispositif de fermeture pour une porte d'un appareil fonctionnant en surpression et/ou à des températures élevées comportant une poignée de porte (25) qui actionne un pêne (27) et des moyens pour l'obtention d'un cran intermédiaire,
caractérisé en ce que
sur le montant de porte (23) est fixé un gond (29), en ce que dans le boîtier de serrure (34) est logé un pêne rotatif (27) entourant le cylindre de gond (29a), lequel pêne présente deux positions de verrouillage (27a, 27b), en ce que la poignée de porte (25) conçue comme un levier à deux bras agit sur le pêne rotatif (27), en ce qu'un cliquet d'arrêt (30) muni de deux crans d'arrêt (30a, 30b) fait face au pêne rotatif (27), en ce que sur la poignée de porte (25) est logé, en reposant sur le pêne rotatif (27), un levier de commande (33) dont la face frontale (33a) sert à soulever le cliquet d'arrêt (30), en ce que la poignée de porte (25) soulève, lors de la première étape d'ouverture, par l'intermédiaire du levier de commande (33), le cliquet d'arrêt (30), le pêne rotatif (24) étant alors stoppé, après avoir franchi le premier cran d'arrêt (30a), par le deuxième cran d'arrêt (30b) et le cylindre de gond (29a) passe, dans 10 pêne rotatif (27) de la première position de verrouillage (27a) à la deuxième position de verrouillage (27b) et
en ce que la poignée de porte (25) soulève, lors de la deuxième étape d'ouverture, le deuxième cran d'arrêt (30b) du cliquet d'arrêt (30), par l'intermédiaire du levier de commande (33), basculant ainsi le pêne (27) en position ouverte.

4. Dispositif de verrouillage selon la revendication 3, caractérisé en ce que le cliquet de verrouillage (30) présente, au-dessus du premier cran d'arrêt (30a), une cheville de butée (31) et, au-dessus du deuxième cran d'arrêt (30b), une cheville de pivot (32) qui coulisse dans les lumières (34c) de deux nervures parallèles (34b).

5. Dispositif de verrouillage selon la revendication 4, caractérisé en ce que le levier de commande (33) est logé, de manière rotative, sur le bras supérieur de levier (25b) de la poignée de porte (25) et vient buter, dans la position de fermeture, avec sa face frontale (33a) contre la cheville de butée (31) du cliquet d'arrêt (30).

6. Dispositif de fermeture selon la revendication 4, caractérisé en ce qu'un ressort en épingle à cheveux (35) pousse le cliquet d'arrêt (30) dans la position finale inférieure.

7. Dispositif de fermeture selon la revendication 4, caractérisé en ce que le bras supérieur de levier (25b) de la poignée de porte (25) agit sur un ressort en épingle à cheveux (36) dont la deuxième branche repose sur le pêne rotatif (27)

8. Dispositif de fermeture selon la revendication 3, caractérisé en ce qu'un ressort en épingle à cheveux (37) pousse le levier de commande (33) contre le pêne rotatif (27).

9. Dispositif de fermeture selon la revendication 5, caractérisé en ce que le levier de commande (33) présente une face de butée pliée en U (33b) qui sert à la remise en place du levier de commande par le pêne rotatif (27).

10. Dispositif de fermeture selon la revendication 5, caractérisé en ce que le levier de commande (33) se compose de deux pièces identiques, de plans parallèles, qui sont reliées entre elles par la face de butée (33b).
